# EUROPEAN PATENT APPLICATION

(11) **EP 4 671 104 A1**
(43) Date of publication of application: **31.12.2025**
(21) Application number: 25184697.8
(22) Date of filing: 23.06.2025
(51) Int. Cl.: B62K 21/18

(54) **TUBULAR MEMBER AND HOLDING MOUNT ASSEMBLY**

(30) Priority: 27.06.2024 TW 113124065
(71) Applicant: J.D Components Co., Ltd., Shou Shui Hsiang, Chang Hua Hsien (TW)
(72) Inventor: FENG, Pin-Chieh, Chang Hua Hsien (TW); HSIAO, Hsueh-Chien, Chang Hua Hsien (TW)
(74) Representative: Straus, Alexander

(57) **Abstract**

A tubular member and holding mount assembly (1) includes a holding mount (10) having an axial hole (11), a tubular member (20) inserted into the axial hole (11) in a manner that allows axial movement and rotation relative to the holding mount (10), an eccentric handlebar (32) swingably mounted to the holding mount (10) to restrict or permit the axial movement of the tubular member (20) depending on its position, and a limiting member (58) rotatably mounted to the holding mount (10) for selectively restricting both the rotation of the tubular member (20) and the swinging movement of the eccentric handlebar (32). When properly coordinated, the limiting member (58) prevents the tubular member (20) from rotating and the eccentric handlebar (32) from being unintentionally released, thereby enhancing the stability and operational safety of the tubular member and holding mount assembly (1).

## Description

### BACKGROUND OF THE INVENTION

### 1. Field of the Invention

The present invention relates to a bicycle and more particularly, to a tubular member and holding mount assembly mounted on a bicycle for height and rotation adjustment. The assembly is capable of preventing accidental open of an eccentric handlebar and avoiding unintended rotation of the tubular member, thereby enhancing operational safety.

### 2. Description of the Related Art

Chinese Patent No. CN 103569287 discloses a rotatable bicycle stem assembly, which includes a shaft sleeve, a stem, an eccentric locking mechanism, and a limiting screw. The shaft sleeve is mounted on the front fork stem of a bicycle via a bearing set and a bicycle head set, and the shaft sleeve has a limiting groove extending in the horizontal direction. One end of the stem is inserted into the shaft sleeve and locked to it via the eccentric locking mechanism. The other end of the stem is used for insertion of the handlebar of a bicycle. The stem further includes a safety hook and a through limiting hole corresponding to the limiting groove. The safety hook is used to prevent the eccentric handlebar of the eccentric locking mechanism from being accidentally opened. The limiting screw passes through the through limiting hole and the limiting groove and is covered by the eccentric handlebar to constrain the stem to an initial position relative to the shaft sleeve. In actual operation, the user must first release the safety hook and unlock the eccentric handlebar to allow the eccentric handlebar to be swung outward relative to the stem. Then the user may apply force to swing the eccentric handlebar outward to expose the limiting screw and operate the limiting screw to rotate the stem relative to the shaft sleeve, thereby rotating the handlebar together with the stem to a position parallel to the bicycle frame for convenient storage.

However, the safety hook only serves to prevent accidental opening of the eccentric handlebar. When the user swings the eccentric handlebar open, the exposed limiting screw can be mistakenly actuated by the user, causing the stem to rotate relative to the shaft sleeve and easily resulting in unintended rotation of the handlebar relative to the front fork stem. Therefore, there are still safety concerns during use. As such, the rotatable bicycle stem assembly disclosed in the aforementioned patent still has room for structural improvement.

### SUMMARY OF THE INVENTION

The present invention has been accomplished in view of the above-noted circumstances. It is an objective of the present invention to provide a tubular member and holding mount assembly that can prevent accidental opening of the eccentric handlebar and avoid unintended rotation of the tubular member, thereby enhancing operational safety.

To achieve the above objective, the tubular member and holding mount assembly provided by the present invention comprises a holding mount, a tubular member, an eccentric handlebar, and a limiting member. The holding mount has an axial hole extending along an axial direction, and an abutment portion adjacent to the axial hole. The tubular member is inserted into the axial hole in a way that the tubular member is rotatable and axially movable relative to the holding mount. The eccentric handlebar is swingably disposed on the holding mount between a tightened position and a released position in a way that the tubular member is restricted from axial movement relative to the holding mount when the eccentric handlebar is in the tightened position, and the tubular member is axially movable relative to the holding mount when the eccentric handlebar is in the released position. The limiting member is disposed on the holding mount and rotatable relative to the holding mount among a first position, a second position, and a third position in a way that the tubular member is restricted from rotation relative to the holding mount when the limiting member is in the first position or the second position, and the tubular member is rotatable relative to the holding mount when the limiting member is in the third position. When the eccentric handlebar is in the tightened position and the limiting member is in the first position, the limiting member is engaged with the eccentric handlebar to restrict the eccentric handlebar from swing toward the released position, and the limiting member is only rotatable to the second position. When the limiting member is in the second position, the eccentric handlebar is swingable relative to the holding mount between the tightened and released positions. When the limiting member is in the third position and the eccentric handlebar is in the released position, the limiting member restricts the eccentric handlebar from returning to the tightened position.

With the foregoing technical features, the tubular member and holding mount assembly of the present invention uses the eccentric handlebar to control axial movement of the tubular member relative to the holding mount, and uses the limiting member to control rotational movement of the tubular member relative to the holding mount. The limiting member is further able to be engaged with the eccentric handlebar to prevent it from swinging relative to the holding mount, thereby avoiding unintended axial movement of the tubular member. Furthermore, only under the condition that the limiting member is rotated to the third position, the tubular member is allowed to rotate relative to the holding mount, thus preventing unintended rotation of the tubular member relative to the holding mount. Accordingly, the tubular member and holding mount assembly of the present invention improves safety through the aforementioned mechanism.

Preferably, the eccentric handlebar has a limiting groove. When the limiting member is in the first position, the limiting member is engaged with the limiting groove, thereby restricting the eccentric handlebar from swinging relative to the holding mount. When the limiting member is in the second position, the limiting member is disengaged from the limiting groove, thereby allowing the eccentric handlebar to swing relative to the holding mount. **In** this way, the limiting member can be stably engaged with the eccentric handlebar.

Preferably, when the limiting member is in the third position and the eccentric handlebar swings from the released position toward the tightened position, the eccentric handlebar is stopped by the limiting member, thereby preventing the eccentric handlebar from swinging to the tightened position relative to the holding mount. In this way, the user must first rotate the limiting member from the third position to the second position to move the limiting member away from the eccentric handlebar before being able to swing the eccentric handlebar to the tightened position. This mechanism serves to remind the user that after adjusting the rotation of the tubular member, the limiting member must be operated first before the eccentric handlebar can be operated.

Preferably, the holding mount further comprises an accommodation recess in communication with the axial hole, and a through aperture in communication with the accommodation recess. An engaging block is slidably disposed in the accommodation recess and provided with an engaging portion. The tubular member has a groove extending axially. The limiting member includes a head and a rod portion connected with the head, the head being located outside the through aperture, and the rod portion being inserted into the through aperture. When the limiting member is in the first position, the head of the limiting member is engaged with the eccentric handlebar, and the rod portion is engaged with the engaging block in a way that the engaging portion of the engaging block is engaged with the groove of the tubular member, thereby restricting the tubular member from rotation relative to the holding mount. When the limiting member is in the second position, the head is disengaged from the eccentric handlebar, and the rod portion is engaged with the engaging block in a way that the engaging portion of the engaging block is engaged with the groove of the tubular member, thereby again restricting the tubular member from rotation relative to the holding mount. When the limiting member is in the third position, the rod portion is disengaged from the engaging block, allowing the engaging portion of the engaging block to be able to disengage from the groove of the tubular member, thereby allowing the tubular member to rotate relative to the holding mount. Thus, through the interaction between the engaging block and the limiting member, the tubular member is selectively restricted from rotation or allowed to rotate relative to the holding mount.

Preferably, the engaging block further has an installation room opposite to the engaging portion. An elastic member is disposed in the installation room to provide an elastic restoring force acting on the engaging block to force the engaging block toward the tubular member. In this way, the engaging block is urged by the elastic restoring force of the elastic member to engage with the groove of the tubular member.

Preferably, the engaging block has a retaining recess, and when the limiting member is in the first position or the second position, the rod portion of the limiting member is engaged with the retaining recess of the engaging block. In this way, the rod portion of the limiting member can be stably engaged with the engaging block and prohibit the engaging block from backward movement relative to the accommodation recess.

Preferably, the rod portion of the limiting member has a recessed portion, and when the limiting member is in the third position, the recessed portion is aimed at the retaining recess of the engaging block to form a gap therebetween, allowing the engaging block to backward slide relative to the accommodation recess. In this way, the engaging block is no longer tightly pressed against the groove of the tubular member, such that the engaging block is slidably movable relative to the accommodation recess.

Preferably, the holding mount has a retaining hole extending axially and communicating with the through aperture. A positioning member is disposed in the retaining hole and provided with a positioning end. The rod portion of the limiting member further includes a first positioning recess, a second positioning recess, and a third positioning recess. When the limiting member is in the first position, the positioning end of the positioning member is engaged with the first positioning recess of the limiting member. When the limiting member is in the second position, the positioning end of the positioning member is engaged with the second positioning recess of the limiting member. When the limiting member is in the third position, the positioning end of the positioning member is engaged with the third positioning recess of the limiting member. In this way, the positioning end of the positioning member positions the limiting member by abutting against the first, second, and third positioning recesses.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a perspective assembled view of a tubular member and holding mount assembly provided by an embodiment of the present invention;
FIG. 2 is a perspective exploded view of the tubular member and holding mount assembly of the present invention;
FIG. 3 is another perspective exploded view of the tubular member and holding mount assembly of the present invention;
FIG. 4 is a front view of the tubular member and holding mount assembly of the present invention, showing the limiting member in the first position and the eccentric handlebar in the tightened position;
FIG. 5 is a transversely sectional view of FIG. 4, showing that the engaging portion of the engaging block is engaged with the groove of the tubular member;
FIG. 6 is an axially sectional view of FIG. 4, showing the rod portion of the limiting member abutting against the engaging block;
FIG. 7 is another axially sectional view of FIG. 4, showing the rod portion of the limiting member abutting against the engaging block;
FIG. 8 is a front view of the tubular member and holding mount assembly of the present invention, showing the limiting member in the second position and the eccentric handlebar in the tightened position;
FIG. 9 is a transversely sectional view of FIG. 8, showing that the engaging portion of the engaging block is engaged with the groove of the tubular member;
FIG. 10 is similar to FIG. 9, showing the eccentric handlebar in the released position;
FIG. 11 is an axially sectional view of FIG. 10, showing the rod portion of the limiting member abutting against the engaging block;
FIG. 12 is another axially sectional view of FIG. 10, showing the rod portion of the limiting member abutting against the engaging block;
FIG. 13 is a front view of the tubular member and holding mount assembly of the present invention, showing the limiting member in the third position and the eccentric handlebar in the released position;
FIG. 14 is a transversely sectional view of FIG. 13, showing that the engaging portion of the engaging block is engaged with the groove of the tubular member;
FIG. 15 is an axially sectional view of FIG. 13, showing that the recessed portion of the limiting member is aimed at the retaining recess of the engaging block;
FIG. 16 is another axially sectional view of FIG. 13, showing that the recessed portion of the limiting member is aimed at the retaining recess of the engaging block;
FIG. 17 is similar to FIG. 14, showing that the engaging block is disengaged from the groove of the tubular member;
FIG. 18 is similar to FIG. 16, showing that the engaging portion of the engaging block is disengaged from the groove of the tubular member;
FIG. 19 is similar to FIG. 14, showing that the eccentric handlebar is stopped by the limiting member;
FIG. 20 is a schematic view showing the tubular member and holding mount assembly of the present invention applied to a handlebar frame; and
FIG. 21 is a schematic view showing the tubular member and holding mount assembly of the present invention applied to a bicycle saddle.

### DETAILED DESCRIPTION OF THE INVENTION

The technical content and features of the present invention will be described in detail in conjunction with the drawings through one or more embodiments described below. The directional descriptive terms such as "up, down, inner, outer, top, and bottom" mentioned in the specification are merely exemplary descriptive terms based on normal usage directions and are not intended to limit the scope of the claims.

Furthermore, singular quantity terms such as "one, a, and the" used in the claims of the present invention encompass the meanings of multiple. Therefore, for example, the description of "a member" refers to one or more members, including equivalent substitutions known to those skilled in the art. All conjunctions used in similar situations should also be understood in the broadest sense, and specific shapes, structural features, or technical terms described in the specification should also be understood to include equivalent substitute structures or technical terms that can achieve the same functions.

In order to detailedly illustrate the technical features of the present invention, the following embodiments are provided and described with reference numerals denoted in the drawings.

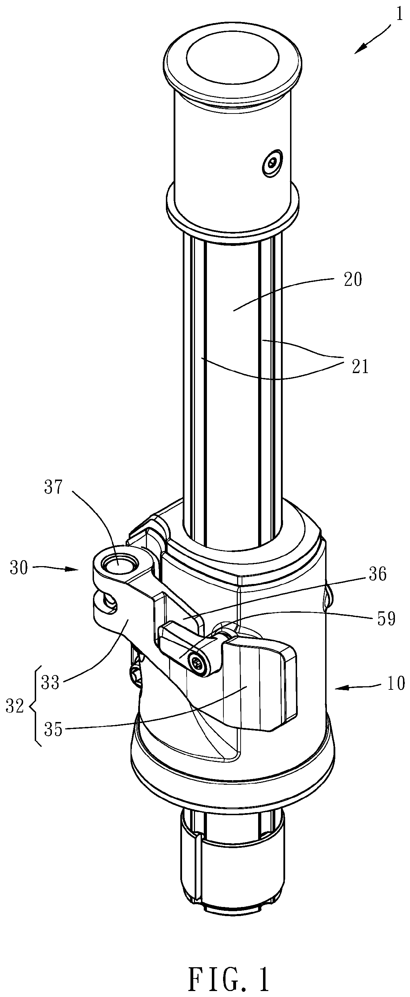

Referring to FIGS. 1 to 3, a tubular member and holding mount assembly 1 provided by an embodiment of the present invention comprises a holding mount 10, a tubular member 20, an eccentric locking unit 30, and a positioning unit 50.

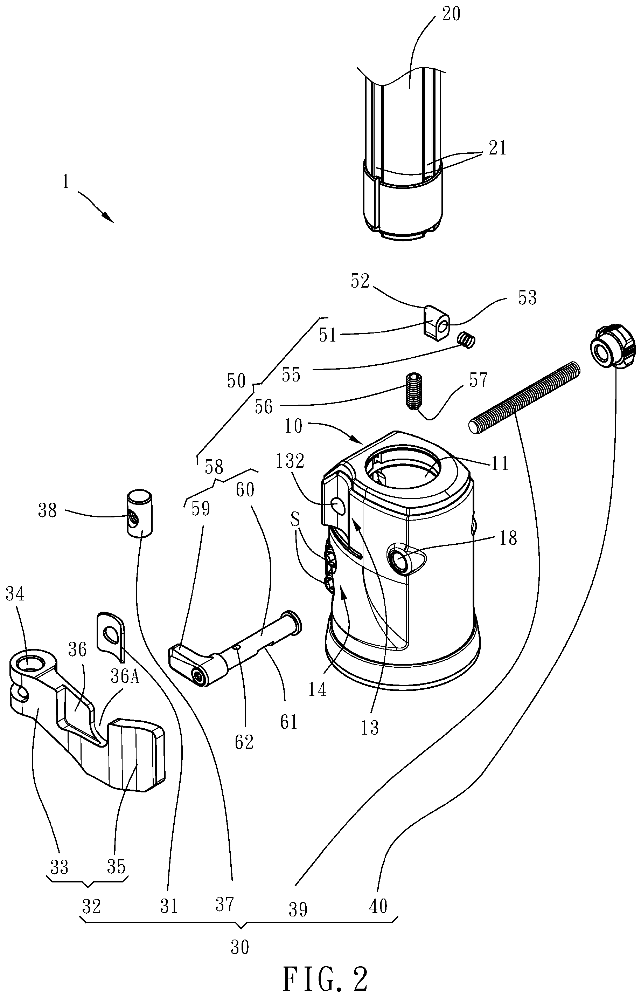

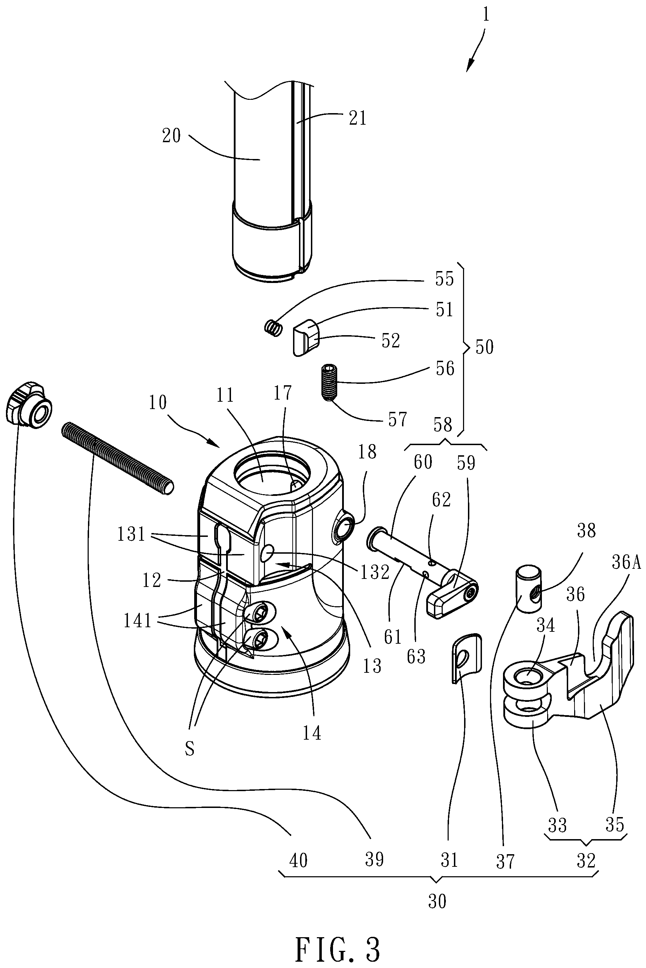

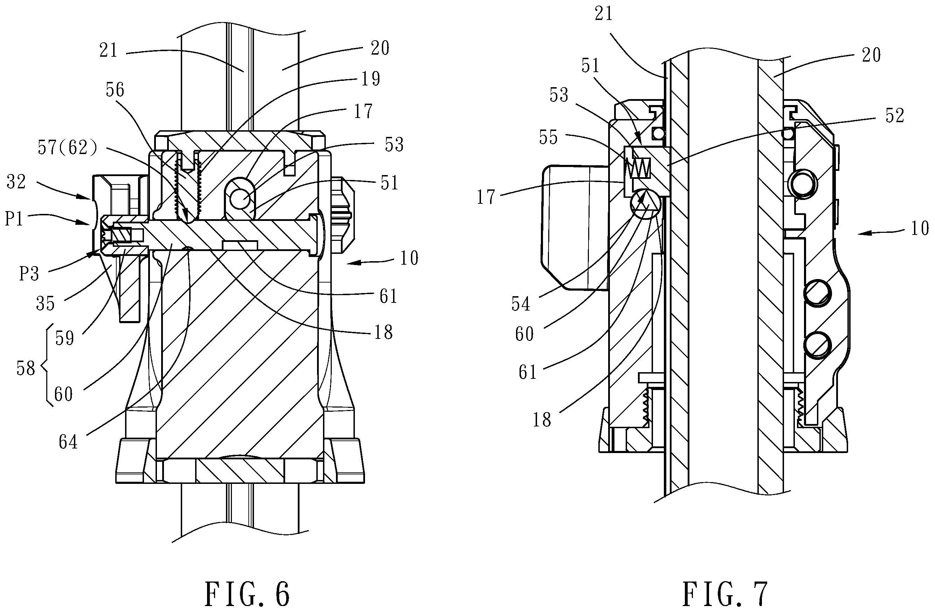

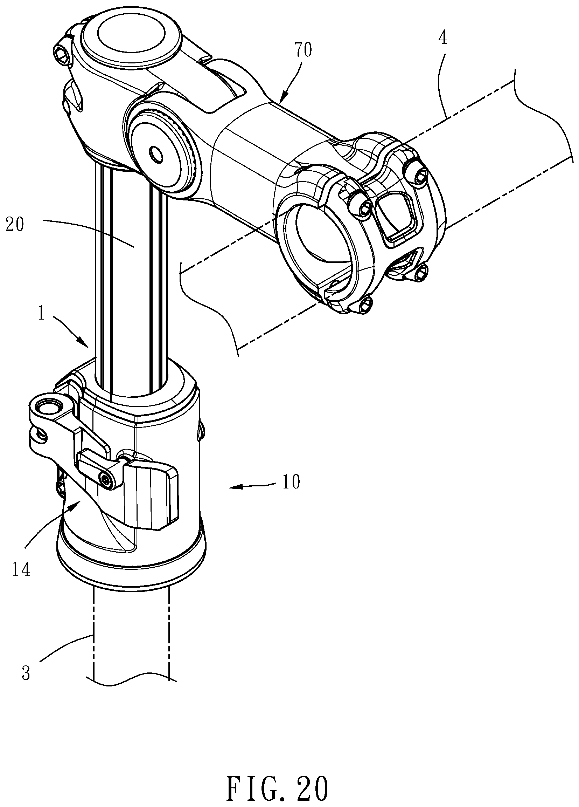

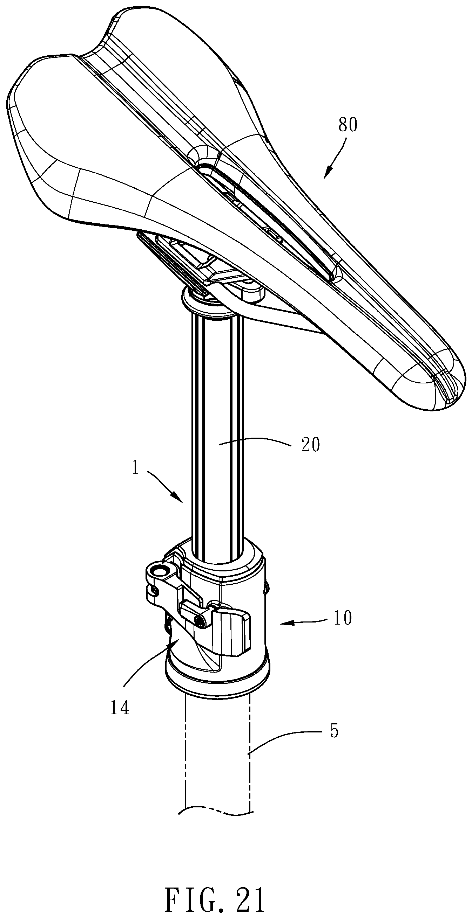

As shown in FIGS. 2 and 3, the holding mount 10 has an axial hole 11 extending axially, a slit 12 extending transversely, and an abutment portion 13 and a locking portion 14 both disposed adjacent to the axial hole 11. The abutment portion 13 is provided at the top end of the slit 12 and has two opposing first lugs 131, each formed with a first through hole 132. The locking portion 14 is provided at the bottom end of the slit 12 and has two opposing second lugs 141. Two retaining members S, such as bolts, are threaded through the second lugs 141 of the locking portion 14 to tighten the locking portion 14 and thereby clamp a front fork stem 3 (as shown in FIG. 20) or a seat tube 5 (as shown in FIG. 21). Additionally, as shown in FIGS. 6 and 7, the holding mount 10 further comprises an accommodation recess 17, a through aperture 18, and a retaining hole 19. The accommodation recess 17 is radially recessed from the wall of the axial hole 11 such that it is in communication with the axial hole 11. The through aperture 18 extends in a tangential direction of the holding mount 10 and communicates with the accommodation recess 17. As shown in FIG. 6, the retaining hole 19 extends downwardly from a top of the holding mount 10 in a direction parallel to the axial direction of the holding mount 10 and communicates with the through aperture 18. The top opening of the retaining hole 19 is covered by a cap as shown in FIG. 6.

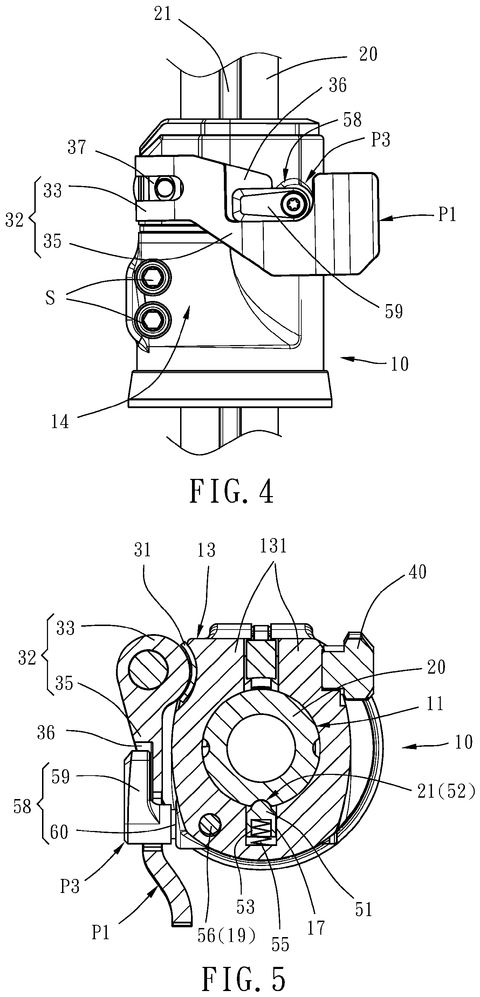

The tubular member 20 is inserted through the axial hole 11 of the holding mount 10 and axially movable and rotatable relative to the holding mount 10. The outer peripheral surface of the tubular member 20 further includes three grooves 21 extending axially. The circumferential angle between adjacent two of the grooves 21 is 90 degrees (as shown in FIG. 5). However, the present invention is not limited to this embodiment. For example, the outer peripheral surface of the tubular member 20 may alternatively be provided with more than three grooves 21, and the circumferential angles between the grooves 21 are not limited to 90 degrees.

As shown in FIGS. 2 and 3, the eccentric locking unit 30 comprises a washer 31, an eccentric handlebar 32, a pivot 37, a screw 39, and a nut 40. The washer 31 is in contact with one side of the abutment portion 13 of the holding mount 10. The eccentric handlebar 32 includes a cam portion 33 and an operating portion 35 extending from the cam portion 33. The cam portion 33 is engaged with the washer 31 and has a through hole 34 extending axially therethrough. The operating portion 35 includes a limiting groove 36 recessed horizontally and a notch 36A adjacent to the limiting groove 36. The pivot 37 is inserted through the through hole 34 of the cam portion 33 of the eccentric handlebar 32 and includes a threaded hole 38 extending laterally therethrough. The screw 39 passes through the two first through holes 132 of the abutment portion 13 of the holding mount 10 and the washer 31, and one end of the screw 39 is threaded into the threaded hole 38 of the pivot 37, while the other end of the screw 39 is threadedly engaged with the nut 40.

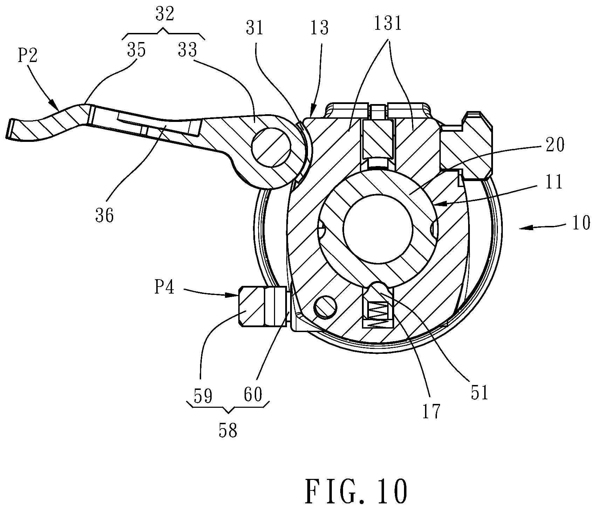

During actual operation, the eccentric handlebar 32 is swingable relative to the holding mount 10 between a tightened position P1 (as shown in FIG. 5) and a released position P2 (as shown in FIG. 10). When the eccentric handlebar 32 is in the tightened position P1 as shown in FIG. 5, the cam portion 33 indirectly presses tightly against the abutment portion 13 of the holding mount 10 via the washer 31, thereby causing the two first lugs 131 to constrict the size of the axial hole 11, such that the axial hole 11 of the holding mount 10 clamps the tubular member 20 and prevents the tubular member 20 from moving axially relative to the holding mount 10. Referring to FIG. 10, when the eccentric handlebar 32 is in the released position P2, the cam portion 33 no longer presses hardly against the washer 31 and thereby releases the abutment portion 13 of the holding mount 10, allowing the two first lugs 131 to loosen the axial hole 11, such that the axial hole 11 of the holding mount 10 releases the tubular member 20 and allows axial movement of the tubular member 20 relative to the holding mount 10.

As shown in FIGS. 2 and 3, the positioning unit 50 includes an engaging block 51, an elastic member 55, a positioning member 56, and a limiting member 58.

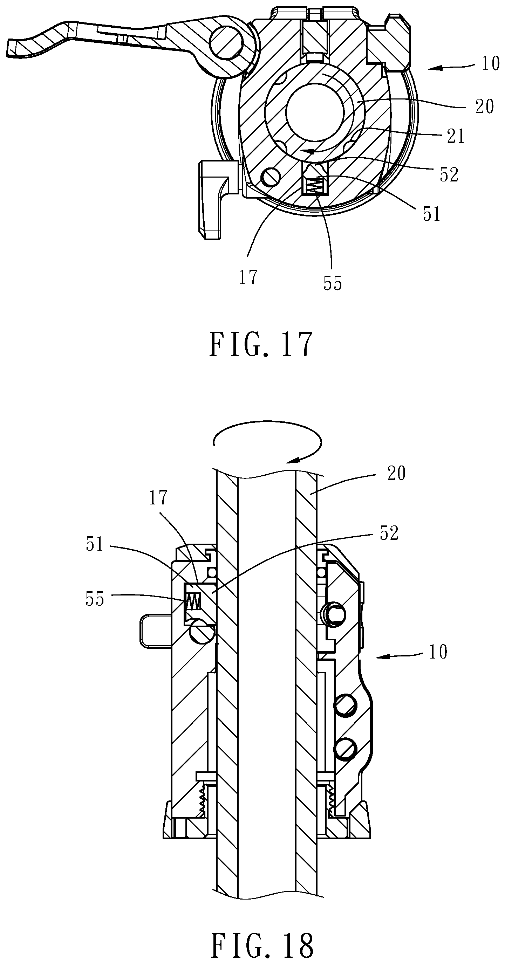

As shown in FIGS. 2, 3, 5, and 7, the engaging block 51 is provided with an engaging portion 52, an installation room 53, and a retaining recess 54. The engaging portion 52 faces the tubular member 20 and protrudes toward the groove 21 of the tubular member 20, with the engaging portion 52 and the groove 21 being conforming in contour. The installation room 53 is positioned opposite to the engaging portion 52, and the retaining recess 54 is located at the bottom of the engaging block 51. The engaging block 51 is slidably disposed in the accommodation recess 17 of the holding mount 10, allowing the engaging portion 52 to be stably engaged with the groove 21 of the tubular member 20 (as shown in FIGS. 5 and 7), or disengaged from the groove 21 of the tubular member 20 (as shown in FIGS. 17 and 18).

As shown in FIGS. 2, 3, and 5, in this embodiment, the elastic member 55 is a compression spring. One end of the elastic member 55 is received in the installation room 53 of the engaging block 51, and the other end is received in the accommodation recess 17 of the holding mount 10 and stopped against the holding mount 10. Thus, the elastic member 55 provides an elastic restoring force acting on the engaging block 51 to force the engaging block 51 to move toward the tubular member 20.

As shown in FIGS. 2, 3, and 6, the positioning member 56 has a positioning end 57 and is fixedly mounted in the retaining hole 19 of the holding mount 10 by threaded engagement.

As shown in FIGS. 2, 3, and 6, the limiting member 58 has a head 59 and a rod portion 60 connected with the head 59. The rod portion 60 is provided with a recessed portion 61, a first positioning recess 62, a second positioning recess 63, and a third positioning recess 64. The first, second, and third positioning recesses 62, 63, 64 are located between the head 59 and the recessed portion 61, and the circumferential angle between each pair of the first, second, and third positioning recesses 62, 63, 64 is 90 degrees. The head 59 of the limiting member 58 is exposed outside the through aperture 18 of the holding mount 10, and the rod portion 60 of the limiting member 58 is rotatably inserted through the through aperture 18 of the holding mount 10.

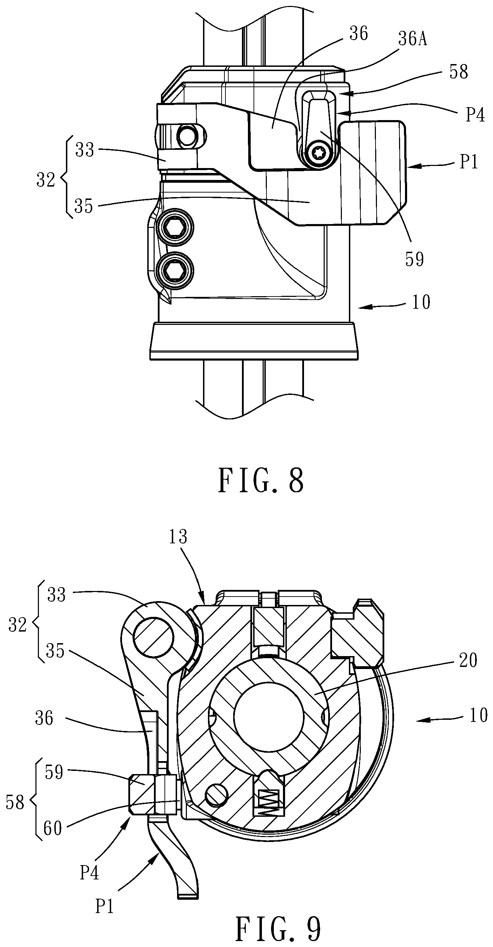

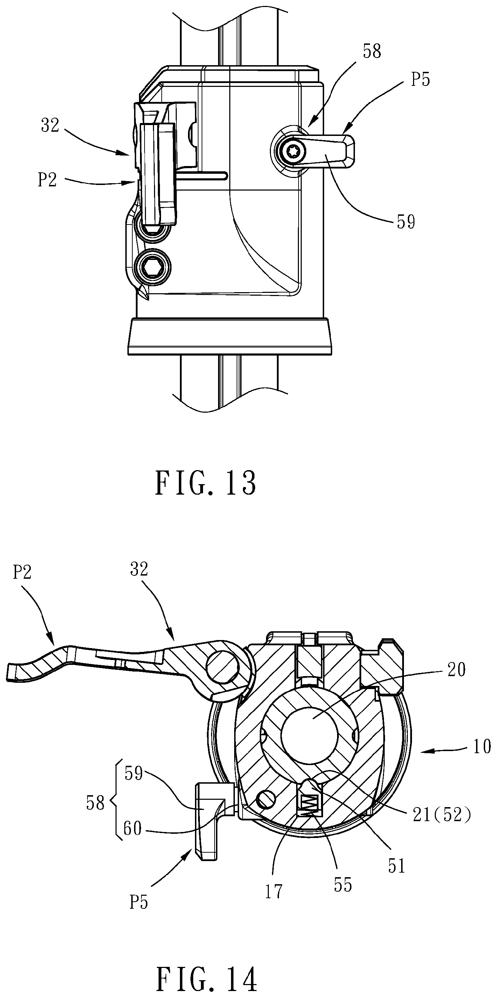

In actual operation, the limiting member 58 is rotatable relative to the holding mount 10 among a first position P3 (as shown in FIG. 4), a second position P4 (as shown in FIG. 8), and a third position P5 (as shown in FIG. 13), as being further detailedly discussed below.

Referring to FIGS. 4 and 5, when the limiting member 58 is in the first position P3, on one hand, the head 59 of the limiting member 58 is stably engaged with the limiting groove 36 of the eccentric handlebar 32, so that the eccentric handlebar 32 is held in the tightened position P1 and cannot swing relative to the holding mount 10 (i.e., the head 59 of the limiting member 58 restricts the eccentric handlebar 32 from swinging toward the released position P2). On the other hand, referring further to FIGS. 5 to 7, the rod portion 60 of the limiting member 58 is stably abutted against the retaining recess 54 of the engaging block 51, such that the engaging block 51 is prohibited from backward sliding along the accommodation recess 17 of the holding mount 10 and the engaging portion 52 of the engaging block 51 is stably engaged with one of the grooves 21 of the tubular member 20, thereby restricting the tubular member 20 from rotating relative to the holding mount 10.

Referring to FIG. 8, when the limiting member 58 is in the second position P4, on one hand, the head 59 of the limiting member 58 is disengaged from the limiting groove 36 of the eccentric handlebar 32 and positioned at the notch 36A of the eccentric handlebar 32, allowing the eccentric handlebar 32 to swing between the tightened position P1 (see FIG. 9) and the released position P2 (see FIG. 10). On the other hand, referring further to FIGS. 10 to 12, the rod portion 60 of the limiting member 58 is still stably engaged with the retaining recess 54 of the engaging block 51, so that the engaging block 51 is still prohibited from backward sliding along the accommodation recess 17 of the holding mount 10 and the engaging portion 52 of the engaging block 51 is stably engaged with one of the grooves 21 of the tubular member 20, thereby restricting the tubular member 20 from rotating relative to the holding mount 10.

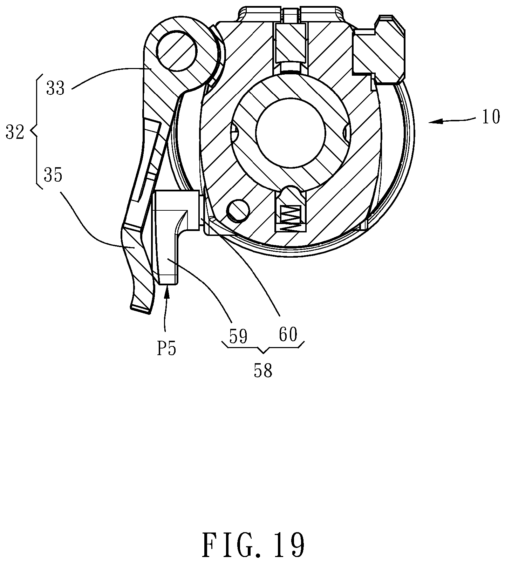

Referring to FIGS. 13 to 16, when the limiting member 58 is in the third position P5 and the eccentric handlebar 32 is in the released position P2, the rod portion 60 of the limiting member 58 is disengaged from the retaining recess 54 of the engaging block 51 in a manner that the recessed portion 61 is aimed at the retaining recess 54 of the engaging block 51 to form a gap G between the recessed portion 61 and the retaining recess 54 of the engaging block 51, allowing the engaging block 51 to backward slide along the accommodation recess 17 to result in that the tubular member 20 is allowed to rotate relative to the holding mount 10 (as shown in FIGS. 17 and 18). Furthermore, in this condition, the limiting member 58 restricts the eccentric handlebar 32 from returning to the tightened position P1 (as shown in FIG. 19) because the eccentric handlebar 32 will be stopped by the limiting member 58, which is stayed at the third position P5, when the eccentric handlebar 32 is swung from the released position P2 toward the tightened position P1.

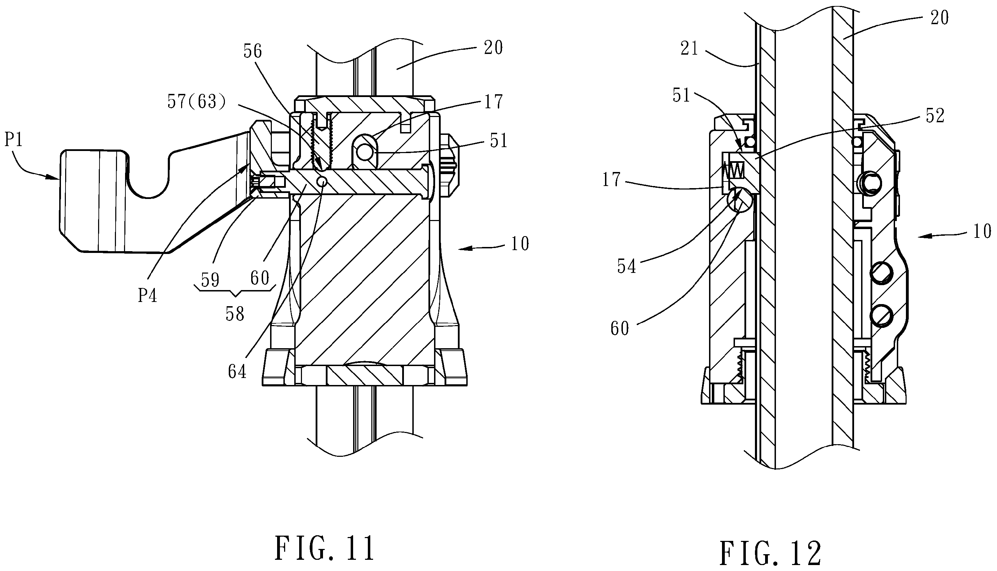

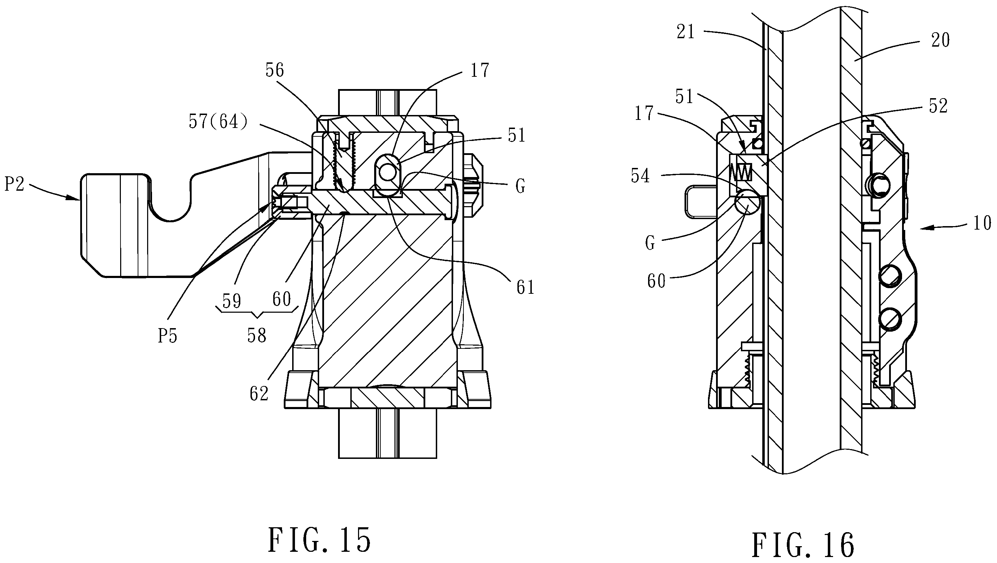

It is further noted that, when the limiting member 58 is in the first position P3 as shown in FIG. 6, the positioning end 57 of the positioning member 56 is engaged with the first positioning recess 62 of the limiting member 58; when the limiting member 58 is in the second position P4 as shown in FIG. 11, the positioning end 57 of the positioning member 56 is engaged with the second positioning recess 63 of the limiting member 58; and when the limiting member 58 is in the third position P5 as shown in FIG. 15, the positioning end 57 of the positioning member 56 is engaged with the third positioning recess 64 of the limiting member 58. Accordingly, the positioning end 57 of the positioning member 56 holds the limiting member 58 in position by abutting against the first positioning recess 62, second positioning recess 63, or third positioning recess 64.

The above describes the structural features of the tubular member and holding mount assembly 1 of the present invention. The following will further introduce the usage and advantages of the tubular member and holding mount assembly 1.

To adjust the height of the tubular member 20, the limiting member 58 must first be rotated. Since the limiting member 58, when in the first position P3 (as shown in FIGS. 4 and 5), is only rotatable to the second position P4 (as shown in FIGS. 8 and 9), the limiting member 58 can be operated to rotate from the first position P3 to the second position P4 to release the restriction of the limiting member 58 on the eccentric handlebar 32. Then, the operating portion 35 of the eccentric handlebar 32 is pulled to swing the eccentric handlebar 32 from the tightened position P1 shown in FIG. 9 to the released position P2 shown in FIG. 10. At this moment, the cam portion 33 of the eccentric handlebar 32 loosens the abutment portion 13 of the holding mount 10, allowing the tubular member 20 to move axially relative to the holding mount 10, thereby enabling height adjustment of the tubular member 20 relative to the holding mount 10. Accordingly, in the task of height adjustment of the tubular member 20, the limiting member 58 serves as a safety latch for the eccentric handlebar 32. By rotating the limiting member 58 between the first position P3, in which it restricts the eccentric handlebar 32, and the second position P4, in which the restriction is released, unintended actuation of the eccentric handlebar 32 can be prevented, thereby avoiding sudden downward displacement of the tubular member 20. Furthermore, when the limiting member 58 rotates between the first position P3 and the second position P4, the tubular member 20 remains restricted from rotation relative to the holding mount 10, and thus the function of the limiting member 58 as a safety latch does not introduce any risk of rotational movement of the tubular member 20 relative to the holding mount 10.

Following the above description, to perform rotation adjustment of the tubular member 20, the eccentric handlebar 32 is first swung to the released position P2 as shown in FIG. 10, thereby creating space to allow the limiting member 58 to rotate to the third position P5. Next, the limiting member 58 is rotated from the second position P4 (as shown in FIG. 10) to the third position P5 (as shown in FIG. 14). At this point, by means of the gap G formed between the recessed portion 61 of the limiting member 58 and the retaining recess 54 of the engaging block 51, as shown in FIGS. 15 and 16, the engaging block 51 is allowed to backward slide along the accommodation recess 17. As a result, the tubular member 20 becomes rotatable relative to the holding mount 10. More specifically, as shown in FIGS. 17 and 18, when the tubular member 20 rotates, its outer wall surface pushes against the engaging portion 52 of the engaging block 51, causing the engaging portion 52 to disengage from the originally engaged groove 21. During this process, the elastic member 55 is compressed by the engaging block 51, storing an elastic restoring force. Next, the tubular member 20 continues to rotate until another groove 21 is aligned with the engaging portion 52 of the engaging block 51. At this moment, the restoring force released from the elastic member 55 acts on the engaging block 51, forcing the engaging portion 52 of the engaging block 51 to re-engage with the groove 21 of the tubular member 20 (as shown in FIGS. 14 and 16). In this way, the rotation adjustment of the tubular member 20 is completed. Therefore, in the rotation adjustment process of the tubular member 20, the eccentric handlebar 32 functions as a safety latch for the limiting member 58, whereby the eccentric handlebar 32 restricts and releases the limiting member 58 from rotating to the third position P5. The procedure of first releasing the eccentric handlebar 32 and then turning the limiting member 58 helps prevent unintended operation of the limiting member 58 that could otherwise cause the tubular member 20 to rotate relative to the holding mount 10, and also avoids the risk of losing control of the bicycle's steering during riding.

Once the tubular member 20 is adjusted to the desired height and rotational direction, the limiting member 58 is rotated from the third position P5 (as shown in FIG. 14) to the second position P4 (as shown in FIG. 10). At this point, the rod portion 60 of the limiting member 58 is engaged with the retaining recess 54 of the engaging block 51, thereby preventing the engaging block 51 from backward sliding along the accommodation recess 17, which in turn prevents the tubular member 20 from rotating relative to the holding mount 10 (as shown in FIGS. 10 to 12). Subsequently, the operating portion 35 of the eccentric handlebar 32 is pushed to swing so that the eccentric handlebar 32 moves from the released position P2 (as shown in FIG. 10) to the tightened position P1 (as shown in FIG. 9). At this time, the cam portion 33 of the eccentric handlebar 32 tightly abuts the abutment portion 13, thereby preventing axial movement of the tubular member 20 relative to the holding mount 10. Then, the limiting member 58 is rotated from the second position P4 (as shown in FIG. 9) to the first position P3 (as shown in FIG. 5). At this point, the rod portion 60 of the limiting member 58 is still engaged with the retaining recess 54 of the engaging block 51 (as shown in FIGS. 6 and 7), thereby preventing the engaging block 51 from backward sliding along the accommodation recess 17 of the holding mount 10, and thus further restricting the tubular member 20 from rotating relative to the holding mount 10. As such, the tubular member 20 is restricted from both axial movement and rotation relative to the holding mount 10, completing the adjustment of the height and rotational direction of the tubular member 20.

It should be further noted that, as shown in FIG. 19, when the limiting member 58 is in the third position P5, and the eccentric handlebar 32 is to be swung back to the tightened position P1, the operating portion 35 of the eccentric handlebar 32 can at most move to a position where the operating portion 35 is stopped at the head 59 of the limiting member 58, such that the eccentric handlebar 32 cannot be swung relative to the holding mount 10 to reach the tightened position P1 as shown in FIG. 9. Therefore, the user must first rotate the limiting member 58 from the third position P5 shown in FIG. 19 to the second position P4 shown in FIG. 9, so that the limiting member 58 is positioned in the notch 36A of the eccentric handlebar 32, as shown in FIG. 8, without interfering with the eccentric handlebar 32. Only then can the eccentric handlebar 32 be swung to the tightened position P1. This mechanism serves to remind the user that after adjusting the rotation of the tubular member 20, the limiting member 58 must be operated first before operating the eccentric handlebar 32. This ensures that when the height of the tubular member 20 is locked, the rotation of the tubular member 20 relative to the holding mount 10 is also simultaneously restricted.

Additionally, the tubular member and holding mount assembly 1 of the present invention can be applied to various mechanical devices as needed to achieve height and rotation adjustment. For example, FIG. 20 shows that the tubular member and holding mount assembly 1 is mounted between a front fork stem 3 and a handlebar frame 70, wherein one end of the handlebar frame 70 is configured to receive a handle 4, and the other end of the handlebar frame 70 is mounted to the top end of the tubular member 20. The front fork stem 3 is inserted into the holding mount 10 and clamped in place by the locking portion 14. In this way, the tubular member and holding mount assembly 1 of the present invention allows for adjusting the height and rotational angle between the handle 4 and the front fork stem 3.

Referring to FIG. 21, the tubular member and holding mount assembly 1 of the present invention can also be installed between a seat tube 5 and a bicycle saddle 80, that is, the bicycle saddle 80 is mounted to the top end of the tubular member 20, and the seat tube 5 is inserted into the holding mount 10 and fixed in place by the locking portion 14. In this way, the tubular member and holding mount assembly 1 of the present invention allows for adjusting the height and rotational angle between the bicycle saddle 80 and the seat tube 5.

In summary, the tubular member and holding mount assembly 1 of the present invention uses the eccentric handlebar 32 to control axial movement of the tubular member 20 relative to the holding mount 10, thereby preventing unintended axial movement of the tubular member 20 relative to the holding mount 10. Additionally, the limiting member 58 is used to control rotation of the tubular member 20 relative to the holding mount 10. The limiting member 58 is also used as a safety latch that is allowed to be engaged with the eccentric handlebar 32 to prevent unintended swinging of the eccentric handlebar 32 relative to the holding mount 10. Furthermore, only when the limiting member 58 is rotated to the third position P5 can the tubular member 20 rotate relative to the holding mount 10, thereby preventing unintended rotation of the tubular member 20 relative to the holding mount 10. Accordingly, the tubular member and holding mount assembly 1 of the present invention enhances safety during use through the foregoing mechanisms.

At last, it should be mentioned again that the constituent elements disclosed in the above embodiments of the present invention are only taken as examples for illustration, not intended to limit the scope of the present invention. The substitution or variation of other equivalent elements should be included within the scope of the following claims of the present invention.

## Claims

1. A tubular member and holding mount assembly (1), **characterized in** comprising:
a holding mount (10) having an axial hole (11) and an abutment portion (13) adjacent to the axial hole (11);
a tubular member (20) inserted into the axial hole (11) in a way that the tubular member (20) is rotatable and axially moveable relative to the holding mount (10);
an eccentric handlebar (32) swingably disposed on the holding mount (10) between a tightened position (P1) and a released position (P2), wherein the eccentric handlebar (32) is configured in a way that the tubular member (20) is restricted from axial movement relative to the holding mount (10) when the eccentric handlebar (32) is in the tightened position (P1), and the tubular member (20) is axially movable relative to the holding mount (10) when the eccentric handlebar (32) is in the released position (P2); and
a limiting member (58) disposed on the holding mount (10) and rotatable relative to the holding mount (10) among a first position (P3), a second position (P4), and a third position (P5), wherein the limiting member (58) is configured in a way that the tubular member (20) is restricted from rotation relative to the holding mount (10) when the limiting member (58) is in the first position (P3) or the second position (P4), and the tubular member (20) is rotatable relative to the holding mount (10) when the limiting member (58) is in the third position (P5);
wherein when the eccentric handlebar (32) is in the tightened position (P1) and the limiting member (58) is in the first position (P3), the limiting member (58) is engaged with the eccentric handlebar (32) to restrict the eccentric handlebar (32) from swinging toward the released position (P2), and the limiting member (58) is only rotatable to the second position (P4);
when the limiting member (58) is in the second position (P4), the eccentric handlebar (32) is swingable relative to the holding mount (10) between the tightened position (P1) and the released position (P2); and
when the limiting member (58) is in the third position (P5) and the eccentric handlebar (32) is in the released position (P2), the limiting member (58) restricts the eccentric handlebar (32) from returning to the tightened position (P1).

2. The tubular member and holding mount assembly (1) as claimed in claim 1, **characterized in that** the eccentric handlebar (32) has a limiting groove (36); when the limiting member (58) is in the first position (P3), the limiting member (58) is engaged with the limiting groove (36); and when the limiting member (58) is in the second position (P4), the limiting member (58) is disengaged from the limiting groove (36).

3. The tubular member and holding mount assembly (1) as claimed in claim 1, **characterized in that** when the limiting member (58) is in the third position (P5) and the eccentric handlebar (32) swings from the released position (P2) toward the tightened position (P1), the eccentric handlebar (32) is stopped by the limiting member (58) so as to restrict the eccentric handlebar (32) from swinging to the tightened position (P1) relative to the holding mount (10).

4. The tubular member and holding mount assembly (1) as claimed in claim 1, **characterized in that** the holding mount (10) comprises an accommodation recess (17) in communication with the axial hole (11), and a through aperture (18) in communication with the accommodation recess (17);
the tubular member (20) has a groove (21) extending axially;
an engaging block (51) is slidably disposed in the accommodation recess (17) and provided with an engaging portion (52);
the limiting member (58) has a head (59) located outside the through aperture (18) of the holding mount (10), and a rod portion (60) connected with the head (59) and inserted into the through aperture (18) of the holding mount (10);
when the limiting member (58) is in the first position (P3), the head (59) of the limiting member (58) is engaged with the eccentric handlebar (32), and the rod portion (60) of the limiting member (58) is engaged with the engaging block (51) in a way that the engaging portion (52) of the engaging block (51) is engaged with the groove (21) of the tubular member (20), thereby restricting the tubular member (20) from rotation relative to the holding mount (10);
when the limiting member (58) is in the second position (P4), the head (59) of the limiting member (58) is disengaged from the eccentric handlebar (32), and the rod portion (60) of the limiting member (58) is engaged with the engaging block (51) in a way that the engaging portion (52) of the engaging block (51) is engaged with the groove (21) of the tubular member (20), thereby restricting the tubular member (20) from rotation relative to the holding mount (10);
when the limiting member (58) is in the third position (P5), the rod portion (60) of the limiting member (58) is disengaged from the engaging block (51), such that the engaging portion (52) of the engaging block (51) is disengageable from the groove (21) of the tubular member (20), thereby allowing the tubular member (20) to rotate relative to the holding mount (10).

5. The tubular member and holding mount assembly (1) as claimed in claim 4, **characterized in that** the engaging block (51) has an installation room (53) opposite to the engaging portion (52); an elastic member (55) is disposed in the installation room (53) to provide an elastic restoring force acting on the engaging block (51) to force the engaging block (51) toward the tubular member (20).

6. The tubular member and holding mount assembly (1) as claimed in claim 4, **characterized in that** the engaging block (51) has a retaining recess (54), and when the limiting member (58) is in the first position (P3) or the second position (P4), the rod portion (60) of the limiting member (58) is engaged with the retaining recess (54) of the engaging block (51).

7. The tubular member and holding mount assembly (1) as claimed in claim 6, **characterized in that** the rod portion (60) of the limiting member (58) has a recessed portion (61), and when the limiting member (58) is in the third position (P5), the recessed portion (61) is aimed at the retaining recess (54) of the engaging block (51) to form a gap (G) between the recessed portion (61) and the retaining recess (54) in a way that the engaging block (51) is slidably moveable relative to the accommodation recess (17).

8. The tubular member and holding mount assembly (1) as claimed in claim 4, **characterized in that** the holding mount (10) has a retaining hole (19) extending axially and communicating with the through aperture (18); a positioning member (56) is disposed in the retaining hole (19) and provided with a positioning end (57);
the rod portion (60) of the limiting member (58) is provided with a first positioning recess (62), a second positioning recess (63), and a third positioning recess (64);
when the limiting member (58) is in the first position (P3), the positioning end (57) of the positioning member (56) is engaged with the first positioning recess (62) of the limiting member (58);
when the limiting member (58) is in the second position (P4), the positioning end (57) of the positioning member (56) is engaged with the second positioning recess (63) of the limiting member (58); and
when the limiting member (58) is in the third position (P5), the positioning end (57) of the positioning member (56) is engaged with the third positioning recess (64) of the limiting member (58).
